# EUROPEAN PATENT APPLICATION

(11) **EP 2 799 218 A1**
(43) Date of publication of application: **05.11.2014**
(21) Application number: 12863326.0
(22) Date of filing: 31.12.2012
(51) Int. Cl.: B29D 30/16, B29D 30/20, B29D 30/08

(54) **ONCE-THROUGH, TWIN-DRUM FORMING MACHINE FOR MOTOR TYRES AND METHOD THEREFOR**

(30) Priority: 31.12.2011 CN 201110456797
(71) Applicant: Yuan, Zhongxue, Shandong 266042 (CN)
(72) Inventor: CHENG, Jiguo, Shandong 266042 (CN); WU, Shoutao, Shandong 266042 (CN); SUN, Mingxin, Shandong 266042 (CN); ZHANG, Hongye, Shandong 266042 (CN)
(74) Representative: Rentsch Partner AG
(86) International application number: PCT/CN2012/087977
(87) International publication number: WO 2013/097790

(57) **Abstract**

The invention discloses a unistage dual-drum forming machine for a car tire and a method thereof, and provides a basic structure of a dual-drum and three-workstation forming machine. A bead ring and a belt-tread component are respectively prepared in advance, and a forming drum capable of axially moving carries a tire body component to enter a forming pressing workstation, so that the overall manufacturing technology is effectively optimized, the single tire blank preparation time is further shortened, and the production efficiency is improved. The forming machine comprises a main machine and a servicer, wherein a belt drum laminating workstation at one side of a belt drum, a main servicer laminating workstation at one side of the forming drum, and a forming pressing workstation at one side of a combined roller are arranged along the center line of a main shaft of the main machine; the prepared belt-cap ply-tread component and sidewall-inner linner-carcass ply component are conveyed to the workstations and combined with the bead ring, so as to carry out turn-up forming and pressing operation technologies of a tire blank; the forming pressing workstation is arranged between the belt drum laminating workstation and the forming pressing workstation.

## Description

### Field of the invention

The invention relates to a unistage method dual-drum forming machine for manufacturing a car tire, and a method thereof. Particularly, a constructing and manufacturing technology of a dual-drum and three-workstation forming machine is adopted. The invention belongs to the field of rubber machinery.

### Background of the invention

The rubber tire used at present is mainly manufactured by the method for manufacturing a meridian tire blank in the previously disclosed patent. A carcass component and a belted-tread component are successively prepared to a finishing drum respectively, so as to manufacture a tire blank in the processes of respectively preparing the tire-body component and the belted-tread component and then convey to the finishing drum.

A dual-drum, triple-drum, four-drum or five-drum forming machine, and a one-stage or two-stage forming method are adopted in general in the existing tire blank manufacturing device and method. Differences between the tire blank production technologies are determined by differences of the manufacturing equipments and methods; these manufacturing equipments and methods have certain extent of defects, and cannot completely the requirements of the tire forming quality and the production efficiency.

The patent is previously disclosed as below: the application number is 200610130223.5; the name is a unistage method forming machine for a semi-steel radial tire; the scheme content is as follows: the forming machine comprises a main engine base; a main case, a forming drum, a tire bead adsorption ring, a tread composite part transfer ring, a belt laminating drum and a paver case are orderly arranged on the main engine base; the forming machine also comprises a main machine feeding device, a paver feeding device, a narrow cap winding device, a pressing device, an automatic distance-adjusting and locating laser device, a tire bead preset device, a tire unloader and an electric system; the forming machine is used for optimizing and combining the functions of one-stage and two-stage forming machines, so as to improve the tire production quality.

But the so-called unistage method forming technology is not fully described in the scheme, and from the embodiments and the figures, it can be seen that preparation of the carcass component, and turn-up forming and pressing are finished on the forming drum which is installed in a fixed manner, namely a plurality of operation technologies need to be orderly carried out in series. As a result, a plurality of important steps in the overall procedure are finished according to the sequence in turn. Therefore, the production technology is long and complicated in process, the manufacturing time of a single tire blank is still long, and more accurate control on the production efficiency of the tire blank is not facilitated.

In addition, the forming machine in the scheme is complicated in structure, and the bead ring and carcass component, which are prepared in advance, and the belted-tread component need to be provided with respective axial transfer rings, so that the quantity and the manufacturing cost of components of the forming machine are increased, excessive space is also correspondingly occupied, and miniature design and production of the forming machine are not facilitated.

For this purpose, the patent application is particularly proposed.

### Invention content

The invention discloses a unistage method dual-drum forming machine for a car tire and a method thereof, and aims at solving the problems of the prior art. Thus, a basic structure of a dual-drum and three-workstation forming machine is provided as follows: a bead ring and a belted-tread component are respectively prepared in advance, and a forming drum capable of axially moving carries a carcass component to enter a forming pressing workstation, so that the overall manufacturing technology is effectively optimized, the single tire blank preparation time is further shortened, and the production efficiency is improved.

Another purpose of the invention is to simplify the structure of the existing forming machine and reduce the number of independently prepared axial transfer rings, so as to reduce the quantity and the manufacturing cost of the components of the forming machine, and facilitate miniature design of the forming machine.

In order to achieve the purposes, the unistage method dual-drum forming machine for the car tire mainly comprises a main machine and a servicer, wherein the main machine comprises a belt drum case, a tire bead transfer ring, a forming drum case, a forming drum, a base and a slide frame, a belted layer transfer ring, a belt drum, a combined roller and a tire bead preset device; The servicer comprises a tread servicer, a belted layer servicer, a cap ply servicer and a main servicer.

Compared with the prior art, the difference is as follows: a belt drum laminating workstation at one side of the belt drum is arranged along a main shaft center line of the main machine, so as to finish laminating of the belted layer and the tread, and winding of the cap ply;

A main servicer laminating workstation at one side of the forming drum is arranged along the main shaft center line of the main machine, so as to finish laminating of the tire side, the inner liner and cord fabric;

A forming pressing workstation at one side of the combined roller is arranged along the main shaft center line of the main machine, so that the prepared belt-cap ply-tread component and sidewall-inner linner-carcass ply component are conveyed to the workstation and combined with a bead ring, so as to carry out turn-up forming and pressing operation technologies of a tire blank; The forming pressing workstation is arranged between the belt drum laminating workstation and the forming pressing workstation.

The forming drum case is carried on the base and the slide frame in a sliding manner, so as to drive the forming drum to the forming pressing workstation.

As the basic scheme, the basic structure of the forming machine is double drums and three workstations; the belt drum laminating workstation and the main servicer laminating workstation arranged along the main shaft center line are respectively carried out; the forming drum capable of axially moving transfers the sidewall-inner linner-carcass ply component, so as to finally finish the preparation technology of the single tire blank at the forming pressing workstation. Therefore, on the basis of accurate control on the preparation quality of the belt-cap ply-tread component and the sidewall-inner linner-carcass ply component, the overall tire blank manufacturing procedure is simplified, and the production efficiency is relatively high.

In order to further reduce the axial distance and space of the floor occupied by the main machine, a portal frame can be arranged above the vertical direction of the main machine; the tire bead transfer ring is suspended and carried on the portal frame in a sliding manner, so as to finish preparation of the bead ring and convey the bead ring to the forming pressing workstation. Thus, the preparation procedure of the belt-cap ply-tread component at one side of the belt drum is not affected in the bead ring presetting process, and the occupied space of the overall main machine is directly optimized in a manner of a common structure of bottom and top slide rails.

In order to improve the processing quality of the belt-cap ply-tread component, corresponding improvement measures can be adopted as follows: the cap ply servicer is arranged between the vertical directions of the tread servicer and the belted layer servicer at the belt drum laminating workstation;

A winding machine head of the belted layer servicer is tangent to the circumferential bottom end of the belt drum, namely the belted layer adopts a lower laminating mode; the winding machine head of the tread servicer is tangent to the circumferential top end of the belt drum, namely the tread adopts an upper laminating mode.

On the basis of the same design angle, an inner liner winding head can extend out of the main servicer laminating workstation to be tangent to the circumferential bottom end of the forming drum, namely the inner liner adopts the lower laminating mode together with the forming drum. By combining with the structure improvement of the unistage method dual-drum forming machine for the car tire, the optimization scheme of the forming method is simultaneously achieved by the invention as follows:
The main machine of the forming machine comprises the comprises the belt drum carried by the belt drum case, and the forming drum carried by the forming drum case;
The main servicer is arranged at the longitudinal vertical side of the forming drum; the tread servicer, the belted layer servicer and the cap ply servicer are arranged at the longitudinal vertical side of the belt drum;
Compared with the prior art, the difference is as follows: the belt drum laminating workstation, the main servicer laminating workstation and the forming pressing workstation are orderly arranged along the main shaft center line of the main machine of the forming machine; Laminating of the belted layer and the tread, and winding of the cap ply are finished at the belt drum laminating workstation;
Laminating of the tire side, the inner liner and the cord fabric is finished at the main servicer laminating workstation;
The prepared belt-cap ply-tread component and the prepared sidewall-inner linner-carcass ply component are respectively conveyed to the forming pressing workstation by the belted layer transfer ring and the forming drum which is axially driven by the forming drum case along the base and the slide frame, and are combined with the bead ring, so as to carry out the turn-up forming and pressing operation technologies of the tire blank.

Further optimization scheme is as follows: the belt-cap ply-tread component, the sidewall-inner linner-carcass ply component and the bead ring are simultaneously prepared, and respectively conveyed to the forming pressing workstation after being prepared.

The tire bead transfer ring conveys the prepared bead ring to the forming pressing workstation in a sliding manner along the portal frame above the vertical direction of the main machine.

The belted layer is downwards laminated to the belt drum, and the tread is upwards laminated to the belt drum at the belt drum laminating workstation.

The inner liner is downwards laminated to the forming drum at the main servicer laminating workstation.

To sum up the contents, the unistage method dual-drum forming machine for the car tire, and the method thereof disclosed by the invention have the advantages as follows:
1. By adopting the basic structure of the dual-drum and three-workstation forming machine, the overall manufacturing technology can be effectively optimized, and the preparation time of the single tire blank is shortened, and the production efficiency is obviously improved.
2. The main machine structure of the forming machine is optimized, and miniature design and reduction of the manufacturing cost of the forming machine are more facilitated.

### Description of figures

The unistage method dual-drum forming machine for the car tire and the method thereof are further described at present by combining with the figures as follows:
The figure 1 is the structural diagram of the unistage method dual-drum forming machine for the car tire;
The figure 2 is the forward and down structural diagrams of the main machine of the forming machine in an initial state;
The figure 3 is the forward and down structural diagrams of the main machine of the forming machine in the forming pressing procedure;
The figure 4 is the structural diagram of the main servicer;
The figure 5 is the structural diagrams of the tread servicer, the belted layer servicer and the cap ply servicer.

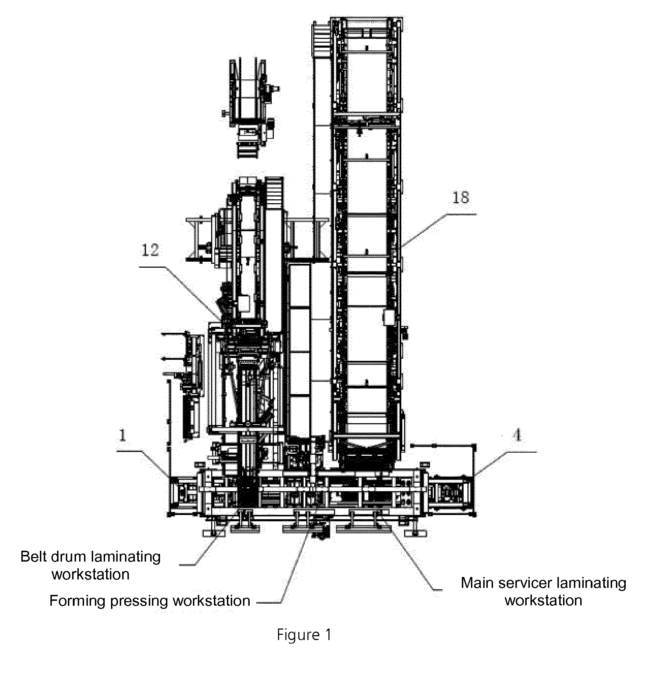

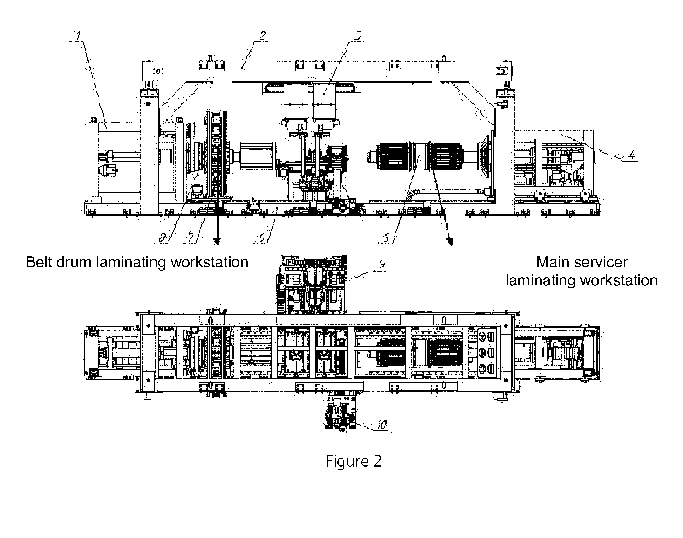

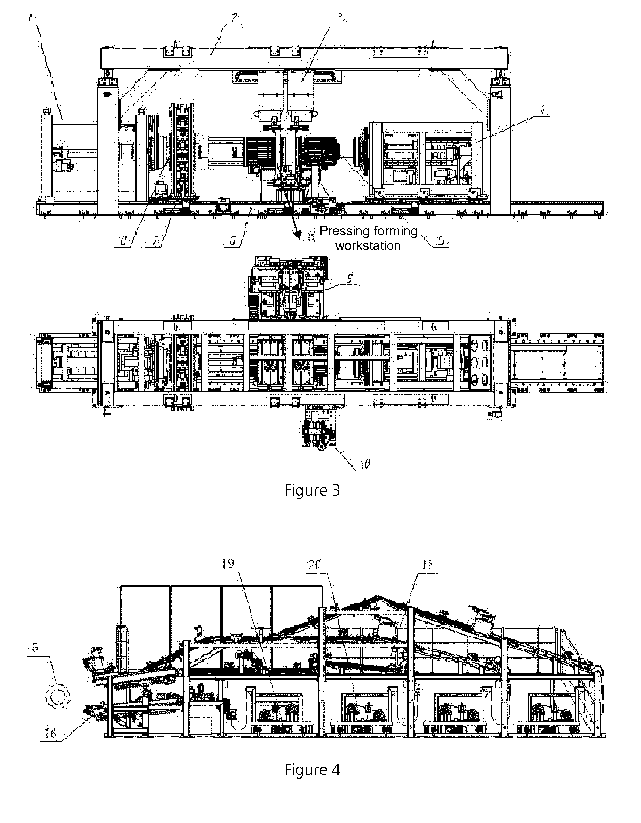

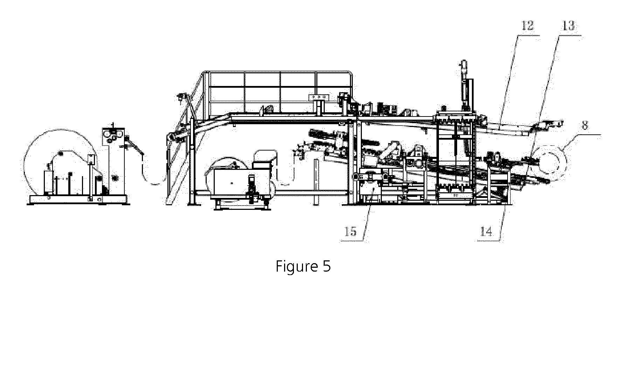

As shown in the figures 1 to 5, a belt drum case 1, a portal frame 2, a tire bead transfer ring 3, a forming drum case 4, a forming drum 5, a base and a slide frame 6, a belted layer transfer ring 7, a belt drum 8, a combined roller 9, a tire bead preset device 10, a tread servicer 12, a belted layer servicer 13, a cap ply winding machine head 14, a cap ply servicer 15, an inner liner winding machine head 16, a main servicer 18, a cord fabric and inner liner guide device 19, and a tire side guide device 20.

### Concrete implementation mode

Embodiment 1, as shown in the figures 1 to 5, the unistage method dual-drum forming machine for the tire car mainly comprises the maim machine, the servicer, an electric system, a safety system and the like,

Wherein the electric system comprises a master control cabinet, a master control system, a gas circuit element and the like;

The main machine comprises the belt drum case 1, the portal frame 2, the tire bead transfer ring 3, the forming drum case 4, the forming drum 5, the base and the slide frame 6, the belted layer transfer ring 7, the belt drum 8, the combined roller 9 and the tire bead preset device 10;

The servicer comprises the tread servicer 12, the belted layer servicer 13, the cap ply servicer 15 5 and the main servicer 18.

The belt drum case 1 is carried on the base and the slide frame 6; the forming drum case 4 with the forming drum 5 is connected to the base and the slide frame 6 in a sliding manner, and can move in a reciprocating manner along the main shaft center line of the main machine.

The compressed roller 9 and the tire bead preset device 10 are respectively arranged at the longitudinal front and rear sides of the main machine;

The belted layer transfer ring 7 is carried on the base and the slide frame 6 in a sliding manner, and can move in a reciprocating manner along the main shaft center line of the main machine, so as to finish preparation of the belt-cap ply-tread component and convey the belt-cap ply-tread component;

The portal frame 2 is arranged above the vertical direction of the main machine; the tire bead transfer ring 3 is suspended and carried on the portal frame 2 in a sliding manner, so as to finish preparation of the bead ring and convey the bead ring.

The belt drum laminating workstation at one side of the belt drum 8 is arranged along the main shaft center line of the main machine, so as to finish laminating of the belted layer and the tread, and winding of the cap ply;

The main servicer laminating workstation at one side of the forming drum 5 is arranged along the main shaft center line of the main machine, so as to finish laminating of the tire side, the inner liner and the cord fabric;

The forming pressing workstation at one side of the combined roller 9 is arranged along the main shaft center line of the main machine, so that the prepared belt-cap ply-tread component and sidewall-inner linner-carcass ply component are conveyed to the workstation and combined with the bead ring, so as to carry out turn-up forming and pressing operation technologies of the tire blank;

The forming pressing workstation is arranged between the belt drum laminating workstation and the forming pressing workstation.

The cap ply servicer 15 is arranged between the vertical directions of the tread servicer 12 and the belted layer servicer 13 at the belt drum laminating workstation; the winding machine head of the belted layer servicer 13 is tangent to the circumferential bottom end of the belt drum 8; the winding machine head of the tread servicer 12 is tangent to the circumferential top end of the belt drum 8.

The inner liner winding machine head 16 extends out of the main servicer laminating workstation to be tangent to the circumferential bottom end of the forming drum 5.

By adopting the unistage method dual-drum forming machine for the car tire, the forming method can be achieved as follows:
The main servicer 18 is arranged at the longitudinal vertical side of the forming drum 5;
The tread servicer 12, the belted layer servicer 13 and the cap ply servicer 15 are arranged at the longitudinal vertical side of the belt drum 8;
The belt drum laminating workstation, the main servicer laminating workstation and the forming pressing workstation are orderly arranged along the main shaft center line of the main machine of the forming machine;
The belt-cap ply-tread component, the sidewall-inner linner-carcass ply component, and the bead ring are simultaneously and respectively prepared;
Namely, laminating of the belted layer and the tread, and winding of the cap ply are finished at the belt drum laminating workstation;
Laminating of the tire side, the inner liner and the cord fabric is finished at the main servicer laminating workstation;
The prepared belt-cap ply-tread component, the prepared sidewall-inner linner-carcass ply component and the prepared bead ring are respectively conveyed to the forming pressing workstation by the belted layer transfer ring 7, the forming drum 5 which is axially driven by the forming drum case 4 along the base and the slide frame 6, and the bead ring transfer ring 3 along the portal frame 2 above the vertical direction of the main machine, so as to carry out the turn-up forming and pressing operation technologies of the tire blank after combination is finished.

The belted layer is downwards laminated to the belt drum 8, and the tread is upwards laminated to the belt drum 8 at the belt drum laminating workstation.

The inner liner is downwards laminated to the forming drum 5 at the main servicer laminating workstation.

## Claims

1. A unistage dual-drum forming machine for a car tire, wherein the forming machine comprises a main machine and a servicer; the main machine comprises a belt drum case (1), a tire bead transfer ring (3), a forming drum case (4), a forming drum (5), a base and a slide frame (6), a belt transfer ring (7), a belt drum (8), a combined roller (9) and a tire bead preset device (10);
The servicer comprises a tread servicer (12), a belt servicer (13), a cap ply servicer (15) and a main servicer (18); the forming machine is **characterized in that**:
A belt drum laminating workstation at one side of the belt drum (8) is arranged along a main shaft center line of the main machine, so as to finish laminating of the belt and the tread, and winding of the cap ply;
A main servicer laminating workstation at one side of the forming drum (5) is arranged along the main shaft center line of the main machine, so as to finish laminating of the tire side, an inner liner layer and cord fabric;
A forming pressing workstation at one side of the combined roller (9) is arranged along the main shaft center line of the main machine, so that the prepared Belt-cap ply-tread component and sidewall-inner liner-carcass ply component are conveyed to the workstation and combined with a bead ring, so as to carry out turn-up forming and pressing operation technologies of a tire blank;
The forming pressing workstation is arranged between the belt drum laminating workstation and the forming pressing workstation.
The forming drum case (4) is carried on the base and the slide frame (6) in a sliding manner, so as to drive the forming drum (5) to the forming pressing workstation.

2. The unistage dual-drum forming machine for the car tire according to claim 1, **characterized in** a portal frame (2) is arranged above the vertical direction of the main machine; the tire bead transfer ring (3) is suspended and carried on the portal frame (2) in a sliding manner, so as to finish preparation of the bead ring and convey the bead ring to the forming pressing workstation.

3. The unistage dual-drum forming machine for the car tire according to claim 1 or 2, **characterized in** the cap ply servicer (15) is arranged between the vertical directions of the tread servicer (12) and the belted layer servicer (13) at the belt drum laminating workstation;
A winding machine head of the belted layer servicer (13) is tangent to the circumferential bottom end of the belt drum (8);
A winding machine head of the tread servicer (12) is tangent to the circumferential top end of the belt drum (8).

4. The unistage dual-drum forming machine for the car tire according to claim 1 or 2, **characterized in** an inner liner machine head (16) extends out of the main servicer laminating workstation to be tangent to the circumferential bottom end of the forming drum (5).

5. A unistage dual-drum forming method for the car tire, wherein the main machine of the forming machine comprises the belt drum (8) carried by the belt drum case (1), and the forming drum (5) carried by the forming drum case (4);
The main servicer (18) is arranged at the longitudinal vertical side of the forming drum (5); the tread servicer (12), the belted layer servicer (13) and the cap ply servicer (15) are arranged at the longitudinal vertical side of the belt drum (8); the forming method is **characterized by** comprising the steps as follows: the belt drum laminating workstation, the main servicer laminating workstation and the forming pressing workstation are orderly arranged along the main shaft center line of the main machine of the forming machine; Laminating of the belted layer and the tread, and winding of the cap ply are finished at the belt drum laminating workstation;
Laminating of the tire side, the inner liner and the cord fabric is finished at the main servicer laminating workstation;
The prepared Belt-cap ply-tread component and the prepared sidewall-inner liner-carcass ply component are respectively conveyed to the forming pressing workstation by the belted layer transfer ring (7) and the forming drum (5) which is axially driven by the forming drum case (4) along the base and the slide frame (6), and are combined with the bead ring, so as to carry out the turn-up forming and pressing operation technologies of the tire blank.

6. The unistage dual-drum forming method for the car tire according to claim 5, **characterized in that** the Belt-cap ply-tread component, the sidewall-inner liner-carcass ply component and the bead ring are simultaneously prepared, and respectively conveyed to the forming pressing workstation after being prepared.

7. The unistage dual-drum forming method for the car tire according to claim 5 or 6, **characterized in that** the tire bead transfer ring (3) conveys the prepared bead ring to the forming pressing workstation in a sliding manner along the portal frame (2) above the vertical direction of the main machine.

8. The unistage dual-drum forming method for the car tire according to claim 5 or 6, **characterized in that** the belted layer is downwards laminated to the belt drum (8), and the tread is upwards laminated to the belt drum (8) at the belt drum laminating workstation.

9. The unistage dual-drum forming method for the car tire according to claim 5 or 6, **characterized in that** the inner liner is downwards laminated to the forming drum (5) at the main servicer laminating workstation.
